# EUROPÄISCHE PATENTSCHRIFT

(11) **EP 1 682 032 B1**
(45) Veröffentlichungstag und Bekanntmachung des Hinweises auf die Patenterteilung: **25.02.2009**
(21) Anmeldenummer: 04797684.0
(22) Anmeldetag: 06.11.2004
(51) Int. Cl.: A61C 17/22

(54) **BÜRSTENTEIL FÜR EINE ELEKTRISCHE ZAHNBÜRSTE**
BRUSH PART FOR AN ELECTRIC TOOTHBRUSH
BROSSE POUR BROSSE A DENTS ELECTRIQUE

(30) Priorität: 13.11.2003 DE 10352993
(43) Veröffentlichungstag der Anmeldung: 26.07.2006
(73) Patentinhaber: Braun GmbH, 61476 Kronberg (DE)
(72) Erfinder: SCHAEFER, Norbert, 60322 Frankfurt (DE); EISENKOLB, Erik, 60385 frankfurt (DE); ENGELMOHR, Reiner, 64546 Mörfelden-Walldorf (DE); REICK, Hansjörg, 61449 Steinbach (DE)
(86) Internationale Anmeldenummer: PCT/EP2004/012583
(87) Internationale Veröffentlichungsnummer: WO 2005/046506

(56) Entgegenhaltungen:
- WO-A-99/20202
- WO-A-02/054906
- US-A- 2 917 758
- US-A- 3 183 538
- US-A- 3 187 360
- US-A- 3 256 031
- US-A- 3 369 265
- US-A- 6 140 723

## Beschreibung

Die Erfindung betrifft ein Bürstenteil nach den Oberbegriff des Anspruchs 1 sowie eine elektrische Zahnbürste, die ein Handstück und ein derartiges Bürstenteil aufweist.

Ein auswechselbares Bürstenteil gemäß dem Oberbegriff des Anspruchs 1 für eine elektrische Zahnbürste ist aus der US 3,369,265 bekannt. Am Bürstenteil sind fest angeordnete Borsten vorhanden. Das zur Verbindung mit dem Handstück vorgesehene Ende des Bürstenteils weist einen Hohlraum auf, in dem zwei gegenüberliegende Rastvertiefungen vorgesehen sind, die beide in derselben axialen Position angeordnet sind. In diese Rastvertiefungen greift ein Verbindungsstift eines Handstücks, das mit entsprechenden Rasterhebungen versehen ist. Das zur Verbindung mit dem Handstück vorgesehene Ende des Bürstenteils ist durch zwei Schlitze in zwei Schenkel aufgeteilt, die beim Aufstecken des Bürstenteils auf den Verbindungsstift auseinander gespreizt werden und ein Aufrasten erlauben. Das Ende des Verbindungsstifts greift in das bündig angepaßte Ende des Hohlraums.

Die WO 00 76420 beschreibt eine elektrische Zahnbürste mit einer Aufsteckbürste. Diese weist ein Kupplungsmittel auf, das durch ein gummielastisches Bauteil mit einer Sägeverzahnung gebildet ist, welches reibschlüssig über einen Gehäuseansatz greift. Damit hohe Haltekräfte erreicht werden, ohne dass das Aufschieben der Aufsteckbürste erschwert wird, wird ein Klemmring verwendet. Dieser ist auf der Aufsteckbürste verdrehbar gehalten und mit einer den Gehäuseansatz spannenden Auflauframpe versehen. Weiterhin ist eine Verdrehsicherung über eine Kupplungshülse vorgesehen. Diese Lösung ist konstruktiv relativ aufwendig und daher teuer.

Ein Bürstenteil der gattungsgemäßen Art ist aus der WO 99 20202 bekannt. Das Bürstenteil kann auf ein Handstück einer elektrischen Zahnbürste aufgesteckt werden, das eine Aufnahme aufweist, aus der eine Welle herausragt. Ein in einem Bürstenschaft des Bürstenteil angeordnetes Axialsicherungselement besitzt ein erstes Federelement, das als Rastfinger ausgebildet ist, und in eine Nut der Welle greifern kann. Ein zweites Federelement in Form eines Biegebalkens wirkt auf die Aufnahme am Handstück, und ist Teil einer Hülse, die in den Bürstenschaft eingesteckt ist. Diese Aufsteckmechanik ist für ein Bürstenteil gedacht, bei dem ein am Bürstenschaft gehalterter Borstenträger oszillierend rotierend von der Welle des Handteils angetrieben werden soll.

Der Erfindung liegt die Aufgabe zugrunde, ein Bürstenteil der gattungsgemäßen Art derart auszugestalten, das es auch bei einer Zahnbürste verwendet werden kann, bei der die Zahnreinigung durch eine schnelle Vibrationsbewegung der Borsten unterstützt wird. Die Übertragung dieser Vibrationen vom Handteil auf das Bürstenteil soll ohne Klappergeräusche im Aufsteckbereich erfolgen, und das Bürstenteil trotzdem leicht aufsteckbar und abnehmbar sein. Die Aufsteckmechanik soll diese vorteilhaften Eigenschaften auch bei vergleichsweise hohen Vibrationsfrequenzen von vorzugsweise 100 bis 300 Hz besitzen.

Diese Aufgabe wird dadurch gelöst, daß das Bürstenteil ein Aufsteckteil aufweist, an dem ein erstes und ein zweites Federelement angeordnet ist, die zueinander axial versetzt sind und bei auf die Welle aufgestecktem Bürstenteil auf die Welle wirken.

Diese Lösung ermöglicht eine spielfreie Verbindung zwischen Welle und Bürstenteil, wobei relativ große Kräfte und Momente übertragbar sind. Die Abstützung des Bürstenteils an der Welle geschieht unter Vorspannung durch insbesondere elastische Formelemente.

In einer vorteilhaften Weiterbildung des erfindungsgemäßen Bürstenteiles sind das erste und das zweite Federelement in derselben radialen Position angeordnet. Dadurch wirken die Aufdruckkräfte der Federelemente in der gleichen Ebene bzw. genauer gesagt in gleicher radialen Richtung. Dies ist vorteilhaft in Bezug auf das Einsteckverhalten des Bürstenteils auf der Welle.

Nach einer vorteilhaften Ausführungsform ist vorgesehen, dass das erste Federelement als Rastfinger ausgebildet ist, welches sich axial erstreckt und in eine etwa V-förmige Rastnut der Welle greift. Dies Maßnahme ist sehr kostengünstig umzusetzen und gibt dem Anwender der Aufsteckbürste durch einen hörbaren und fühlbaren Rastvorgang einen Hinweis, dass die Aufsteckbürste am Handstück festsitzt.

Wenn nach einer vorteilhaften Maßnahme das zweite Federelement an einem dem Borstenträger zugewandten Bereich angeordnet ist, während das erste Federelement weiter weg von den Borten angeordnet ist, dann kann das zweite Federelement am freien Wellenende wirken. Das heisst, dass zu Beginn des Aufsteckvorgangs nur das erste Federelement wirkt und ein sehr geringer Widerstand beim Aufstecken spürbar ist. Erst zum Schluß greift das zweite Federelement, das vorzugsweise mit einer höheren Anpresskraft dimensioniert ist

Eine bevorzugte Anordnung des Rastfingers, bei der dieser in Richtung des Handstücks weist, hat den Vorteil, daß die Rastnut tiefer und größer sein kann, da in der Nähe des Handstücks die Welle in der Regel einen größeren Durchmesser besitzt. Die größere Rastnut bzw. der größere Rastfinger ermöglicht einen besseren Rastvorgang.

Eine bevorzugte Ausführung der erfindungsgemäßen Aufsteckbürste, bei der das zweite Federmittel ein axial gerichteter Federsteg mit einer zur Welle hin gekrümmten Biegung ist, wobei der Federsteg zwischen zwei axialen Schlitzen des Aufsteckteils angeordnet ist, hat den Vorteil einer kostengünstigen und lange haltbaren Lösung. Eine erforderliche Anpresskraft ist auch nach sehr häufigen Auswechseln der Aufsteckbürste sichergestellt.

Einen noch besseren Halt bietet ein drittes Federelement nach einer weiteren vorteilhaften Weiterbildung der erfindungsgemäßen Aufsteckbürste. Das dritte Federelement ist axial versetzt zu den ersten beiden Federelementen angeordnet. Zweckmäßigerweise besitzt das Aufsteckteil mehrere, insbesondere drei, radial versetzte federnde Finger, welche im aufgesetzten Zustand gegen die Welle drücken. Durch diese Abstützung der Welle an mindestens drei axial versetzten Punkten sitzt die Aufsteckbürste besonderes geräuscharm und sicher an der Welle. Radikal stützt sich das Aufsteckteil vorzugsweise auch an drei Punkten der Welle ab.

Gemäß einer weiteren bevorzugten Ausführungsform des erfindungsgemäßen Bürstenteils ist vorgesehen, dass es zum Aufsetzen auf eine Welle mit mehreren Querschnittsbereichen ausgebildet ist, wobei die Welle einen im Wesentlichen D-förmigen Querschnitt am vorderen, dem Borstenträger zugewandten Ende und einen kreisförmigen Querschnitt am hinteren, dem Handstück zugewandten Ende aufweist, wobei am vorderen Ende der Welle vorzugsweise eine Abflachung vorhanden ist, an der ein Federelement anliegt. Dies ermöglicht ein bequemes Aufsetzten und einen guten Führungsvorgang der Aufsteckbürste. Einerseits besitzt die Wellenspitze einen kleinen Querschnitt, das in eine relativ große Einstecköffnung des Aufsteckteils eingeführt wird. Andererseits wird das Bürstenteil mit seinen Borsten radial richtig ausgerichtet. Im ersten Moment der Aufsteckbewegung können die Borsten sogar in beliebiger radialen Ausrichtung sein. Durch eine praktisch automatische Drehbewegung des Bürstenteils in einer schon teilweise eingeführten Position, wird - durch bevorzugte quer zur Welle vorhandene Einführungschrägen und/oder Krümmungen an der Welle und/oder dem Aufsteckteil - eine exakte Lageausrichtung der Borsten erreicht. Dadurch wird der Aufsteckvorgang erheblich erleichtert. Ein verkehrtes Aufstecken ist unmöglich.

Wenn das Aufsteckteil zum Aufsetzen auf einer Welle mit wenigstens zwei kreisförmigen Querschnittsbereichen unterschiedlichen Durchmessers ausgebildet ist, wobei an den unterschiedlichen Querschnittsbereichen unterschiedliche Federelemente ansetzen, dann können z.B. dritte Federelemente an einem vergrößerten Querschnittsbereich ansetzten. Vorzugsweise ist ein erster Durchmesser für das erste Federelement und ein zweiter, größerer Durchmesser für das drittefederelement vorgesehen. Beim Aufschieben des Bürstenteils ist zunächst eine sehr geringe Kraft erforderlich, da das dritte Federelement erst am Ende der Aufschiebbewegung sich an der Welle abstützt. Dies sorgt für ein leichtes Einführen des Aufsteckteils.

Damit das Bürstenteil mit einer Stoßdämpferfunktion ausgestattet ist, ist es von Vorteil, wenn es eine weichelastische Ummantelung, die sich mindestens über einen Teilbereich des Bürstenteils erstreckt, umfaßt. Diese Ummantelung ist vorzugsweise in einem borstennahen Bereich angeordnet, wobei vorzugsweise eine weichelastische Komponente ein Hartteil mindestens in einem gegenüberliegenden Bereich der Borsten umschließt. Diese Stoßdämferfunktion ermöglicht es, dass bei hohen Vibrationsfrequenzen die Kräfte auf die Zähne bei Berührungen durch den Borstenträger gedämpft und reduziert werden. Die Berührung wird somit vom Benutzer nicht als störend oder gar schmerzhaft empfunden. Möglich sind Antriebsfrequenzen oberhalb von 100 Hz, insbesondere von 200 bis 500 Hz, beispielsweise 260 Hz oder höhere Werte. Ohne eine entsprechende Stoßdämpferwirkung könnte es durch die hohe Beschleunigung im Extremfall zu einer Beschädigung der Zahnsubstanz kommen. Es ist dabei ausreichend, wenn sich die Ummantelung über einen Teil, vorzugsweise etwa der Hälfte eines Umfangs und/oder nur in der Nähe des Bürstenteils erstreckt. Insbesondere bedeckt eine weichelastische Komponente zusätzlich Seitenbereiche des Bürstenteils ganz oder teilweise. Die Ummantelung kann eine strukturierte Oberfläche, insbesondere mit Noppen oder Rippen besitzen. Optimal ist, es wenn die weichelastische Komponente eine Shorehärte von 30 bis 60 A Shore hat.

Weitere vorteilhafte Weiterbildungen der Erfindung sind in den Unteransprüchen genannt.

Anhand der Figurenbeschreibung wird ein Ausführungsbeispiel eines erfindungsgemäßen Bürstenteils, die Erfindung sowie weitere Vorteile derselben näher erläutert.

Es zeigt:
- Fig. 1: eine Darstellung eines Bereiches eines Handstücks einer elektrischen Zahnbürste von der Seite, bei der eine Welle dargestellt ist,
- Fig. 2: eine Schnittdarstellung der Welle nach der Schnittlinie A-A in Fig. 1,
- Fig. 3: einen Darstellung eines erfindungsgemäßen Bürstenteiles,
- Fig. 4: einen Querschnitt gemäß der Schnittlinie B-B in Fig. 3,
- Fig. 5: einen Querschnitt gemäß der Schnittlinie C-C in Fig. 3,
- Fig. 6: einen Querschnitt gemäß der Schnittlinie D-D in Fig. 3,
- Fig. 7: einen Darstellung eines erfindungsgemäßen Bürstenteiles wie in Fig. 1, jedoch im aufgesteckten Zustand,
- Fig. 8: eine erste Variante des erfindungsgemäßen Bürstenteiles mit teilweise weichelatischer Ummantellung,
- Fig. 9: eine zweite Variante des erfindungsgemäßen Bürstenteiles mit teilweise weichelatischer Ummantellung und
- Fig. 10: eine weitere Variante des erfindungsgemäßen Bürstenteiles mit vollständig weichelatischer Ummantellung.

In den Figuren sind stets gleiche Teile mit denselben Bezugszeichen versehen.

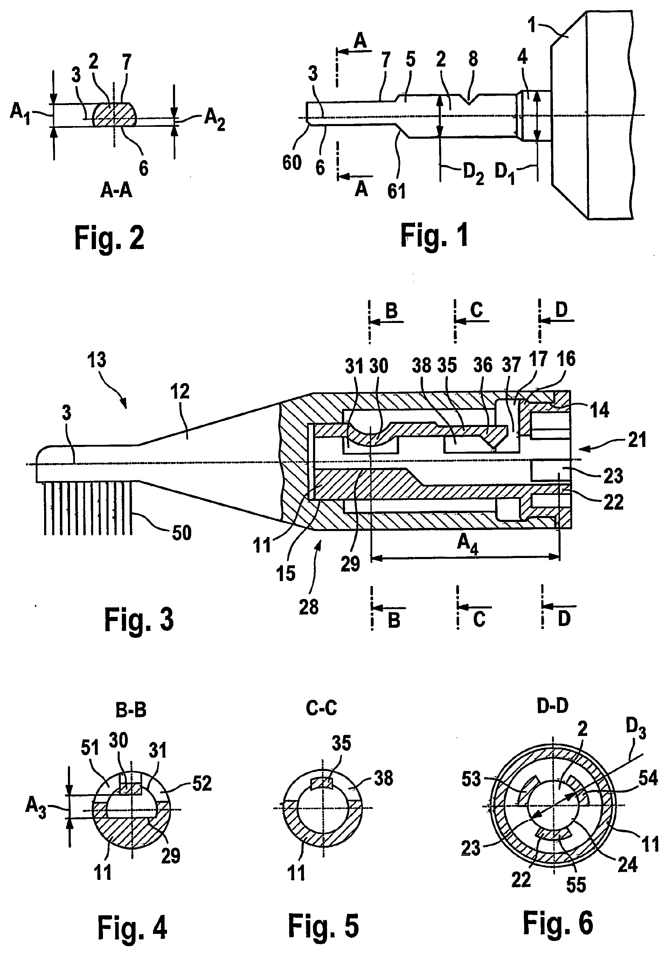

Fig. 1 zeigt einen Verbindungsbereich eines Handstücks 1 einer elektrischen Zahnbürste zur Verbindung mit einem in Fig. 3 dargestellten erfindungsgemäßen Bürstenteil 13.

Das Handstück 1 umfasst ein Kunststoffgehäuse sowie alle zum Betrieb erforderlichen Bauteile, wie einem Elektromotor, ein Getriebe, Akkumulatoren oder Batterien, eine Steuerung und dergleichen. Diese Komponenten befinden sich im Gehäuse und sind nicht dargestellt.

Wie in Fig. 1 veranschaulicht ist, ragt unmittelbar aus dem Handstück 1 eine insbesondere aus Metall bestehende Welle 2, die mit einer hohen Frequenz, von etwa 260 Hz eine kleine Torsionsschwingung um ihre Längsachse ausführt. D.h. die Welle 2 führt angetrieben von einem Elektroantrieb eine Vibrationsbewegung aus. Andere Vibrationsbewegungen z.B. solche entlang der Wellenachse 3 oder eine Kombinationen davon sind auch möglich. Diese Vibrationsbewegung wird unmittelbar auf Borsten 50 des Bürstenteiles 13 übertragen. Die Borsten 50 sind in einem Borstenbereich unmittelbar fest oder über einen nicht dargestellten auswechselbaren Borstenhalter am Bürstenteil 13 befestigt. Die Borsten 50 bewegen sich jedoch nicht relativ zum Bürstenteil, sondern nur relativ zum Handstück 1. Sie bewegen sich also zusammen mit dem Bürstenteil 13. Die Vibrationsbewegung der Borsten 50 wird zur Reinigung und Pflege der Zähne genutzt.

Das Bürstenteil 13 weist einen Bürstenschaft 12 - vorzugsweise aus Kunststoff - aus, in dem ein Aufsteckteil 11 - vorzugsweise auch aus Kunststoff - form- und/oder kraftschlüssig befestigt, insbesondere durch Rastmittel im Bürstenschaft 12 verrastet ist. Vorzugsweise sind der Bürstenschaft 12 im Wesentlichen rohrförmig und das Aufsteckteil 11 als Hülse ausgebildet. An einer Stirnseite bzw. einem Ende 21 des Bürstenteiles 13 bzw. des Aufsteckteiles 11 befindet sich eine etwa kreisförmige Einführungsöffnung, in die die Welle 2 steckbar ist.

Das Bürstenteil 13 ist also auf der Welle 2 des Handstücks 1 aufsteckbar und von dieser lösbar ausgebildet.

Das Aufsteckteil 11 ist mit einem unmittelbar auf die Welle 2 wirkenden ersten Federelement 35 versehen, wie Fig. 3 zeigt. Dieses ist als Rastelement zum Einrasten an einem Rastansatz 8 der Welle 2 ausgebildet. Das erste Federelement weist vorzugsweise einen Rastfinger mit einer etwa V-förmigen Rastnase 36 auf, die in eine V-förmige Rastnut 8 der Welle 2 greift, so dass das Bürstenteil 13 auch axial an der Welle 2 fixiert ist, wobei der Rastfinger Axialkräfte überträgt. Das erste Federelement erstreckt sich vorzugsweise axial zur Welle 2. Das freie Ende des Rastfingers grenzt an einem Freiraum 37 des Aufsteckteils 11, wobei seitlich des Rastfingers Materialaussparungen 38 vorhanden sind.

Das Bürstenteil 13 ist weiterhin mit einem zweiten, axial zum ersten Federelement 35 versetzten Federelement 30 versehen ist.

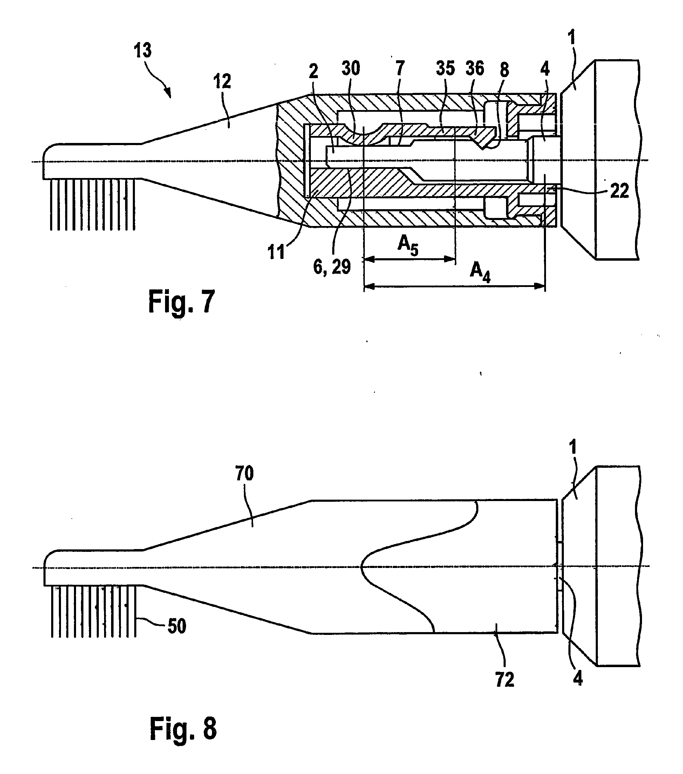

Erfindungsgemäß ist das zweite Federelement 30 am Aufsteckteil 11 angeordnet und wirkt ebenfalls unmittelbar auf die Welle 2. Dadurch stützt sich das Bürstenteil 13 oder besser gesagt das Aufsteckteil 11 an zwei axial beabstandeten Punkten an der Welle 2 ab, was den Einsatz von hohen Antriebsfrequenzen erlaubt. Der axiale Abstand A₅ (vgl. Fig. 7) zwischen dem ersten Federelement 35 und dem zweiten Federelement 30 beträgt vorzugsweise 5 bis 20 mm, insbesondere etwa 8 bis 14 mm, z.B. 12 mm, was ein guter Kompromiß zwischen Minimierung der Holsenabmessungen und Maximierung der Geräuschdämmung ist.

Wie die Figuren 4 und 5 zeigen, sind das erste Federelement 35 und das zweite Federelement 30 vorzugsweise in derselben radialen Position angeordnet, wobei das zweite Federelement 30 an einem dem Borstenträger bzw. den Borsten 50 zugewandten Bereich angeordnet ist, während das erste Federelement 35 weiter weg vom Borstenträger angeordnet ist, wie Fig. 3 veranschaulicht. Vorzugsweise zeigt der Rastfinger 35 in Richtung des Handstücks 1.

Das zweite Federelement 30 besteht, wie die Figuren 3 und 7 zeigen, aus einem axial gerichteten Federsteg mit einer zur Welle 2 hin gekrümmten Biegung. Dieser ist insbesondere als Biegebalken ausgebildet. Der Federsteg liegt zwischen zwei axialen Schlitzen 51, 52 bzw. Aussparungen 31 (Fig. 4) des Aufsteckteils 11. Beim Einstecken der Bürstenteiles 13 wird der Federsteg 30 leicht nach außen verbogen und drückt mit seiner Federkraft direkt auf die Welle 2, wie Fig. 7 zeigt. Der Rastfinger 35 drückt ebenfalls mit seinem Federsteg und/oder mit seiner Rastnase 36 gegen die Welle 2. Der Abstand A₃ (Fig. 4) ist kleiner als der Abstand A₁.(Fig. 2). Die Differenz beträgt insbesondere weniger als 1 mm.

Die Federwirkung des gebogenen Federstegs 30 entsteht durch Zwangsentformung, wenn nach einem Spritzen des Aufsteckteils 11 ein Kern herausgezogen wird, der für diese gebogene Form im Herstellungsprozess vorgesehen ist.

Das Aufsteckteil 11 ist mit einem axial zu den ersten beiden Federelementen 30, 36 versetzten dritten Federelement 22 versehen, welches vorzugsweise in der Nähe der Einstecköffnung liegt bzw. an dem dem Handstück 1 zugewandten Ende 21 angeordnet ist. Das erste Federelement 35 liegt dann zwischen dem zweiten Federelement 30 und den dritten Federelement 22.

Wie der Fig. 6 zu entnehmen ist, besteht das dritte Federelement 22 aus mehreren, insbesondere drei, radial versetzten federnden Fingern 53 - 55, welche im aufgesetzten Zustand ebenfalls gegen die Welle 2 drücken. Die Finger 53 - 55 erstrecken sich axial und zeigen vorzugsweise in Richtung des Handstücks 1 und sind relativ kurz, vorzugsweise nur 1 bis 3 mm lang. Zwischen dem Fingern 53 - 55 sind Freiräume 23 vorhanden.

Im nicht eingestecktem Zustand grenzen die freien Erden der Finger 53 bis 55 an einer (nur gedachten) Kreislinie 24 (Fig. 6) mit einem Durchmesser D₃. Der Durchmesser D₁ der Welle 2 in diesem Bereich ist größer als der Durchmesser D₃, so dass eine radiale Vorspannung zwischen einem hinteren Abschnitt 4 (Fig. 1) der Welle 2 und den Fingern 53 - 55 des Aufsteckteiles 11 entsteht.

Wie in den Figuren 1 und 2 gezeigt ist, ist die Welle 2 mit mehreren Querschnittsbereichen ausgebildet, und zwar mit einem Bereich mit einem kreisförmigen Querschnitt und einem Durchmesser D₁ in der Nähe des Handstücks 1 für das dritte Federelement 22, einen Bereich mit ebenfalls kreisförmigen Querschnitt und mit einem etwas kleineren Durchmesser D₂ etwa in der Mitte der Welle 2, wobei der Durchmesser D₂ für das erste Federelement 35 vorgesehen ist, und einem vorderen Bereich mit reduziertem Querschnitt (vgl. A1 in Fig. 2) für das zweite Federelement 30 am freien Ende der Welle 2. Am diesem vorderen, dem Borstenträger zugewandten Ende weist die Welle 2 einen im Wesentlichen D-förmigen Querschnitt auf. In diesen Bereich befinden sich zwei parallele Flächen 6 und 7. Die in Berührung mit dem zweiten Federelement 30 stehende Fläche 7 ist kleiner, z.B. ¼ bis ¾, insbesondere etwa die Hälfte der gegenüberliegenden Fläche 6. Die Fläche 6 liegt in der Nähe der Achse 3, während die Abflachung 7 bzw. die Fläche 7 dicht am Umfang eines vorderen Abschnitts 5 liegt. Der Abstand A₂ kann z.B. kleiner als 1 mm sein. Die Fläche 6 kann auch genau die Achse 3 treffen oder sogar darüber angeordnet sein. Der Abstand A₁ zwischen beiden Flächen beträgt vorzugsweise etwa 1,5 bis 2,5 mm bzw. etwa die Hälfte des Durchmessers D₂. Der Durchmesser D₂ beträgt vorzugsweise 80% bis 97 % des Durchmessers D₁ und insbesondere 3 mm bis 5 mm, z.B. 4 mm.

Der Abstand A₄ zwischen dem zweiten und dem dritten Federelement 30, 22 ist relativ groß und beträgt vorzugsweise 20 - 40 mm, insbesondere 23 - 27 mm. Dies ist günstig für die Übertragung von Biegemomenten zwischen Welle 2 und Aufsteckteil 11.

Das dritte Federelement 22 liegt im Wellenbereich mit dem größten Durchmesser Die. Das erste Federelement 35 liegt im Bereich mit dem verringerten Durchmesser D₂, und das zweite Federelement 30 liegt somit im D-förmigen, vorderen Wellenbereich. Das Aufsteckteil 11 umschließt den D-förmigen Bereich, so dass das Bürstenteil 13 nur in einer bestimmten radialen Position auf die Welle 2 steckbar ist.

Eine Ebene Fläche 29 (Fig. 4) des Aufsteckteils 11 liegt bündig an der Fläche 6 (Fig. 2) an, so dass hohe Drehmomente übertragbar sind. Der Federsteg 30 kann Querkräfte und Biegemomente zwischen Welle 2 und Aufsteckteil 11 übertragen.

Durch eine vordere Einführungsschräge 60 in der Nähe der Fläche 6 und eine weitere Einführungsschräge 61 im Bereich des Durchmessers D₂ wird das Aufstecken erleichtert, so dass sich das Bürstenteil 13 wie von selbst in die richtige Position dreht.

Wie Fig. 3 weiterhin zeigt, wird das Aufsteckteil bzw. die Hülse 11 in den Bürstenschaft eingepreßt bzw. kraftschlüssig befestigt, und zwar an Stellen 14 und 15 jeweils an den Enden der Hülse 11. Axial ist die Hülse 11 durch einen ringförmigen, nach außen gerichteten Befestigungskragen 16 mit dem Bürstenschaft 12 zusätzlich formschlüssig befestigt, wobei am Bürstenschaft 12 hierfür eine Rille 17 vorhanden ist. Die Hülse 11 ist somit kraft- und formschlüssig im Bürstenschaft 12 befestigt.

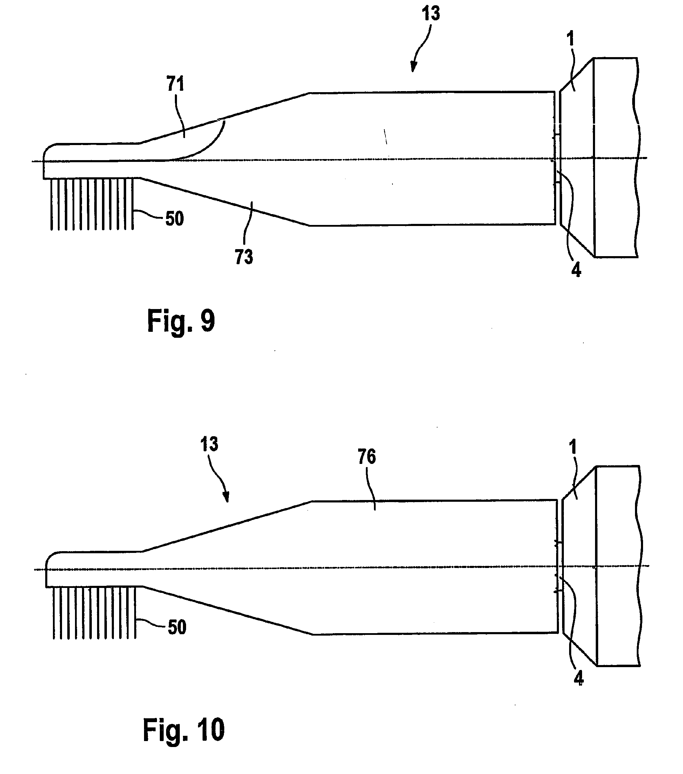

Die Figuren 8 und 9 veranschaulichen eine sehr vorteilhafte Ausführungsform des Bürstenteiles 13 mit weichelastischen Bereichen. Die weichelastische Ausbildung ist in Kombination mit der erfindungsgemäßen Federelementanordnung sinnvoll. Diese in den Figur 8 oder 9 gezeigte Ausbildung kann aber in Kombination mit einer anderen Aufstecklösung gebracht werden.

Das Bürstenteil 13 bzw. der Bürstenschaft 12 besitzt eine weichelastische Ummantelung 70, 71 oder 76. Diese erstreckt sich mindestens über einen Teilbereich des Bürstenteils und zwar bedeckt diese vorzugsweise mindestens eine Rückseite des beborsteten Bereiches. Diese Ummantelung 70 oder 71 ist also vorzugsweise in einem borstennahen Bereich angeordnet. Eine weichelastische Komponente, die die Ummantellung 70 oder 71 bildet umschließt ein Hartteil 72 oder 73, welches in einem gegenüberliegenden Bereich der Borsten 50 liegt. Vorzugsweise erstreckt sich die Ummantelung 71 über einen Teil, vorzugsweise etwa der Hälfte eines Umfangs und ist nur in der Nähe der Borsten 50 vorhanden.

Die weichelastische Komponente kann zusätzlich, wie Fig. 8 zeigt, Seitenbereiche des Bürstenteils ganz oder teilweise bedecken.

Wie Fig. 10 veranschaulicht kann auch einen weichelastische Ummantellung 76 vollständig das Bürstenteil 13 umschließen.

Die weichelastische, insbesondere gummiartige Kunststoffmasse wird mit Hilfe eines Zwei-Komponenten-Kunstoffspritzverfahrens gespritzt.

Diese elastische Ummantelung kann eine strukturierte Oberfläche, insbesondere mit Noppen oder Rippen besitzen, so dass der Bürstenschaft besonders griffig ist.

Wenn die Borten 50 weggelassen werden bzw. gegen Massageelemente ausgetauscht werden, kann ein derartiges vibrierendes Gerät mit einer weichelastischen Komponente auch als Massagegerät dienen.

### Liste der Bezugszeichen

- 1: Handstück
- 2: Welle
- 3: Achse
- 4: Abschnitt
- 5: Abschnitt
- 6,7: Flächen
- 8: Rastnut
- 11: Aufsteckteil
- 12: Bürstenschaft
- 13: Bürstenteil
- 14, 15: Stellen
- 16: Befestigungskragen
- 17: Rille
- 21: Ende
- 22: Drittes Federelement
- 23: Freiräume
- 24: Kreislinie
- 30: Zweites Federelement
- 35: Erstes Federelement
- 36: Rastnase
- 37: Freiraum
- 38: Materialaussparungen
- 50: Borsten
- 51, 52: Schlitze
- 53 - 55: Finger
- 61,62: Einführungsschrägen
- 70,71,76: Ummantelung
- 72, 73: Hartteil

## Patentansprüche

1. Bürstenteil (13), das auf eine Welle (2) eines Handstücks (1) einer elektrischen Zahnbürste aufsteckbar und von dieser lösbar ausgebildet ist, mit einem Borstenbereich, einem Bürstenschaft (12) und einem im Bürstenschaft (12) angeordneten Aufsteckteil (11), das ein erstes Federelement (35) und ein zweites Federelement (30) aufweist, die bei auf die Welle (2) aufgestecktem Bürstenteil (13) auf die Welle (2) wirken, **dadurch gekennzeichnet, daß** die Federelemente (35, 30) zueinander axial versetzt sind.

2. Bürstenteil nach Anspruch 1, **dadurch gekennzeichnet, dass** das erste und das zweite Federelement (35, 30) in der selben radialen Position angeordnet sind.

3. Bürstenteil nach Anspruch 1 oder 2, **dadurch gekennzeichnet, dass** das erste Federelement (35) als Rastfinger ausgebildet ist, welches sich axial erstreckt und in eine etwa V-förmige Rastnut (8) der Welle (2) greift.

4. Bürstenteil nach einem der vorhergehenden Ansprüche, **dadurch gekennzeichnet, dass** das zweite Federelement (30) an einem einem Borstenträger zugewandten Bereich angeordnet ist, während das erste Federelement (35) weiter weg vom Borstenträger angeordnet ist.

5. Bürstenteil nach Anspruch 3 und 4, **dadurch gekennzeichnet, dass** der Rastfinger in Richtung des Handstücks (1) weist.

6. Bürstenteil nach einem der vorhergehenden Ansprüche, **dadurch gekennzeichnet, dass** das zweite Federelement (30) ein axial gerichteter Federsteg mit einer zur Welle (2) hin gekrümmten Biegung ist, wobei der Federsteg zwischen zwei axialen Schlitzen (51, 52) des Aufsteckteils (11) angeordnet ist.

7. Bürstenteil nach einem der vorhergehenden Ansprüche, **dadurch gekennzeichnet, dass** das Aufsteckteil (11) mit einem axial zu den ersten beiden Federmitteln (35, 30) versetzten dritten Federmittel (22) versehen ist.

8. Bürstenteil nach Anspruch 7, **dadurch gekennzeichnet, dass** das erste Federelement (35) zwischen dem zweiten und den dritten Federelement (30, 22) angeordnet ist, wobei das dritte Federelement (22) vorzugsweise an einem dem Handstück (1) zugewandten Bereich angeordnet ist.

9. Bürstenteil nach Anspruch 7 oder 8, **dadurch gekennzeichnet, dass** das dritte Federelement (22) mehrere, insbesondere drei, radial versetzte federnde Finger (53 - 55) besitzt, welche im aufgesetzten Zustand gegen die Welle (2) drücken.

10. Bürstenteil nach einem der vorhergehenden Ansprüche, **dadurch gekennzeichnet, dass** das Aufsteckteil (11) zum Aufsetzen auf eine Welle (2) mit mehreren Querschnittsbereichen ausgebildet ist, wobei die Welle einen im Wesentlichen D-förmigen Querschnitt am vorderen, dem Borstenträger zugewandten Ende und einen kreisförmigen Querschnitt am hinteren, dem Handstück (1) zugewandten Ende (21) aufweist, wobei am vorderen Ende der Welle (2) vorzugsweise eine Abflachung (7) vorhanden ist, an der das zweite Federelement (30) anliegt.

11. Bürstenteil nach einem der Ansprüche 7 bis 10, **dadurch gekennzeichnet, dass** das Aufsteckteil (11) zum Aufsetzen auf eine Welle (2) mit zwei kreisförmigen Querschnittsbereichen unterschiedlichen Durchmessers (D₁, D₂) ausgebildet ist, wobei an den unterschiedlichen Querschnittsbereichen unterschiedliche Federelemente (35, 22) ansetzen.

12. Bürstenteil nach Anspruch 11, **dadurch gekennzeichnet, dass** ein erster Durchmesser (D₂) für das erste Federelement (35) und ein zweiter, größerer Durchmesser (D₁) für das dritte Federelement (22) vorgesehen ist.

13. Bürstenteil nach einem der vorhergehenden Ansprüche, **dadurch gekennzeichnet, dass** das Aufsteckteil (11) im Bürstenschaft (12) form- und/oder kraftschlüssig befestigt, insbesondere eingerastet und/oder eingepreßt ist.

14. Bürstenteil für eine elektrischer Zahnbürste nach einem der vorhergehenden Ansprüche, **gekennzeichnet durch** eine weichelastische Ummantelung (70, 71, 76), die sich mindestens über einen Teilbereich des Bürstenteils (13) erstreckt, wobei diese Ummantelung vorzugsweise in einem borstennahen Bereich, insbesondere auf einer Rückseite eines beborsteten Bereiches angeordnet ist, wobei vorzugsweise eine weichelastische, gummiartige Kunststoffkomponente ein Hartteil aus Kunststoff vollständig oder teilweise umschließt.

15. Bürstenteil nach Anspruch 14, **dadurch gekennzeichnet, dass** sich die Ummantelung (71) über einen Teil, vorzugsweise etwa der Hälfte eines Umfangs des Bürstenteils (13) und/oder nur in der Nähe der Borsten (50) erstreckt.

16. Bürstenteil nach Anspruch 14 oder 15, **dadurch gekennzeichnet, dass** eine weichelastische Komponente zusätzlich Seitenbereiche des Bürstenteils (13) ganz oder teilweise bedeckt.

17. Bürstenteil nach einem der Ansprüche 14 bis 16, **dadurch gekennzeichnet, dass** die Ummantelung (70, 71, 76) eine strukturierte Oberfläche, insbesondere mit Noppen oder Rippen, besitzt.

18. Bürstenteil nach einem der vorhergehenden Ansprüche, **dadurch gekennzeichnet, dass** Borsten (50) unmittelbar fest mit dem Bürstenteil (13) oder fest über ein lösbares Verbindungselement verbunden sind.

19. Bürstenteil nach einem der vorhergehenden Ansprüche, **dadurch gekennzeichnet, dass** der Bürstenschaft (12) im Wesentlichen rohrförmig und das Aufsteckteil (11) als Hülse ausgebildet sind.

20. Elektrische Handzahnbürste mit einem Handstück (1) und einem Bürstenteil (13) nach einem der vorhergehenden Ansprüche.

21. Elektrische Handzahnbürste nach Anspruch 20, **dadurch gekennzeichnet, dass** unmittelbar aus dem Handstück (1) die Welle (2) herausragt.

22. Elektrische Handzahnbürste nach Anspruch 20 oder 21, **gekennzeichnet durch** eine Ausbildung derart, dass das Bürstenteil (13) eine Vibrationsbewegung hoher Frequenz, insbesondere mit mindestens 100 Hz, vorzugsweise zwischen 200 und 500 Hz, vorzugsweise mit etwa 260 Hz, ausführt.

## Claims

1. A brush attachment (13) adapted to be attached to and detached from a shaft (2) of a handle (1) of an electric toothbrush, with a bristle area, a brush shank (12) and a plug-on part (11) disposed in the brush shank (12), said plug-on part (11) including a first spring element (35) and a second spring element (30) which act on the shaft (2) when the brush attachment (13) is plugged onto the shaft (2) **characterized in that** the spring elements (35, 30) are arranged in an axially offset relation to each other.

2. The brush attachment as claimed in claim 1, **characterized in that** said first and said second spring element (35, 30) are arranged in the same radial position.

3. The brush attachment as claimed in claim 1 or 2, **characterized in that** said first spring element (35) is constructed as a detent finger that extends axially and engages in an approximately V-shaped detent groove (8) of the shaft (2).

4. The brush attachment as claimed in any one of the preceding claims, **characterized in that** said second spring element (30) is arranged on an area close to a bristle carrier while the first spring element (35) is arranged at a location more remote from the bristle carrier.

5. The brush attachment as claimed in claim 3 and 4, **characterized in that** said detent finger points in the direction of the handle (1).

6. The brush attachment as claimed in any one of the preceding claims, **characterized in that** said second spring element (30) is an axially aligned spring bar with a bend curved in the direction of the shaft (2), whereby said spring bar is arranged between two axial slots (51, 52) of the plug-on part (11).

7. The brush attachment as claimed in any one of the preceding claims, **characterized in that** said plug-on part (11) has a third spring element (22) arranged in an axially offset position relative to the first two spring elements (35, 30).

8. The brush attachment as claimed in claim 7, **characterized in that** said first spring element (35) is disposed between the second and the third spring element (30, 22), with the third spring element (22) being preferably arranged on an area close to the handle (1).

9. The brush attachment as claimed in claim 7 or 8, **characterized in that** said third spring element (22) possesses several, in particular three, radially offset resilient fingers (53 - 55) that urge against the shaft (2) in the mounted state.

10. The brush attachment as claimed in any one of the preceding claims, **characterized in that** said plug-on part (11) is constructed for mounting on a shaft (2) having several cross sectional areas, said shaft having an essentially D-shaped cross section at its forward end close to the bristle carrier and a circular cross section at its rear end (21) close to the handle (1), the forward end of the shaft (2) preferably having a flattening (7) against which the second spring element (30) rests.

11. The brush attachment as claimed in any one of the claims 7 to 10, **characterized in that** said plug-on part (11) is constructed for mounting on a shaft (2) having two circular cross sectional areas of various diameters (D₁, D₂), with different spring elements (35, 22) resting against the different cross sectional areas.

12. The brush attachment as claimed in claim 11, **characterized in that** provision is made for a first diameter (D₂) for the first spring element (35) and for a second, bigger diameter (D₁) for the third spring element (22).

13. The brush attachment as claimed in any one of the preceding claims, **characterized in that** said plug-on part (11) is fastened in the brush shank (12) by positive and/or frictional engagement therewith, being in particular snap-locked and/or press-fitted into place.

14. A brush attachment for an electric toothbrush, according to any one of the preceding claims, **characterized by** a soft elastic padding (70, 71, 76) that extends at least over a section of the brush attachment (13) and is arranged preferably in a region proximate the bristles, in particular on a rear side of an area set with bristles, with preferably a soft-elastic, rubbery plastic component encompassing a hard part of plastic fully or in part.

15. The brush attachment as claimed in claim 14, **characterized in that** said padding (71) extends over a partial area, preferably about half of a circumference of the brush attachment (13), and/or only in the vicinity of the bristles (50).

16. The brush attachment as claimed in claim 14 or 15, **characterized in that** a soft elastic component additionally covers side areas of the brush attachment (13) in full or in part.

17. The brush attachment as claimed in any one of the claims 14 to 16, **characterized in that** said padding (70, 71, 76) has a structured, in particular studded or ribbed, surface.

18. The brush attachment as claimed in any one of the preceding claims, **characterized in that** the bristles (50) are fixedly secured to the brush attachment (13) either directly or by way of a detachable connecting element.

19. The brush attachment as claimed in any one of the preceding claims, **characterized in that** said brush shank (12) is shaped in an essentially tubular configuration and said plug-on part (11) is constructed as a sleeve.

20. A hand-held electric toothbrush having a handle (1) and a brush attachment (13) according to any one of the preceding claims.

21. The hand-held electric toothbrush as claimed in claim 20, **characterized in that** the shaft (2) projects directly out of the handle (1).

22. The hand-held electric toothbrush as claimed in claim 20 or 21, **characterized by** a design such that the brush attachment (13) executes a vibratory motion of high frequency, in particular of at least 100 Hz, preferably between 200 and 500 Hz, preferably of 260 Hz, approximately.

## Revendications

1. Partie brosse (13) conçue de façon à pouvoir être montée de manière amovible sur un arbre (2) d'un manche (1) de brosse à dents électrique, avec une région de poils, un corps de brosse (12) et une pièce de montage (11) disposée dans la corps de brosse (12), comportant un premier élément ressort (35) et un deuxième élément ressort (30) agissant sur l'arbre (2) lorsque la partie brosse (13) est montée sur l'arbre (2), **caractérisée en ce que** les éléments ressorts (35, 30) sont décalés axialement l'un par rapport à l'autre.

2. Partie brosse selon la revendication 1, **caractérisée en ce que** le premier et le deuxième élément ressort (35, 30) sont disposés dans la même position radiale.

3. Partie brosse selon la revendication 1 ou 2, **caractérisée en ce que** le premier élément ressort (35) est conçu comme un doigt d'encliquetage s'étendant axialement et s'engageant dans une rainure d'encliquetage (8) en forme de V de l'arbre (2).

4. Partie brosse selon l'une des revendications précédentes, **caractérisée en ce que** le deuxième élément ressort (30) est disposé dans une région tournée vers un support de poils, tandis que le premier élément ressort (35) est disposé plus à l'écart du support de poils.

5. Partie brosse selon les revendications 3 et 4, **caractérisée en ce que** le doigt d'encliquetage est dirigé vers le manche (1).

6. Partie brosse selon l'une des revendications précédentes, **caractérisée en ce que** le deuxième élément ressort (30) est une barrette convexe avec une courbure courbée vers l'arbre (2), la barrette convexe étant disposée entre deux fentes axiales (51, 52) de la pièce de montage (11).

7. Partie brosse selon l'une des revendications précédentes, **caractérisée en ce que** la pièce de montage (11) est pourvue d'un troisième élément ressort (22) décalé axialement par rapport aux deux premiers éléments ressorts (35, 30).

8. Partie brosse selon la revendication 7, **caractérisée en ce que** le premier élément ressort (35) est disposé entre le deuxième et le troisième élément ressort (30, 22), le troisième élément ressort (22) étant de préférence disposé dans une région tournée vers le manche (1).

9. Partie brosse selon la revendication 7 ou 8, **caractérisée en ce que** le troisième élément ressort (22) possède plusieurs, en particulier trois, doigts élastiques (53-55) décalés radialement, qui à l'état monté appuient contre l'arbre (2).

10. Partie brosse selon l'une des revendications précédentes, **caractérisée en ce que** la pièce de montage (11) est conçue pour être montée sur un arbre (2) avec plusieurs zones de section transversale, l'arbre comportant une section transversale essentiellement en forme de D à l'extrémité avant tournée vers le support de poils, et une section transversale circulaire à l'extrémité arrière (21) tournée vers la manche (1), un aplatissement (7) étant de préférence prévu à l'extrémité avant de l'arbre (2), sur lequel s'applique le deuxième élément ressort (30).

11. Partie brosse selon l'une des revendications 7 à 10, **caractérisée en ce que** la pièce de montage (11) destinée à être montée sur l'arbre (2) est conçue avec deux zones de section transversale circulaires de diamètres différents (D₁, D₂), différents éléments ressorts (35, 22) s'appliquant sur les différentes zones de section transversale.

12. Partie brosse selon la revendication 11, **caractérisée en ce qu'**un premier diamètre (D₂) est prévu pour le premier élément ressort (35) et un deuxième diamètre plus grand (D₁) est prévu pour le troisième élément ressort (22).

13. Partie brosse selon l'une des revendications précédentes, **caractérisée en ce que** la pièce de montage (11) est fixée, en particulier encliquetée et/ou pressée, par complémentarité de forme et/ou par blocage, dans le corps de brosse (12).

14. Partie brosse pour une brosse à dents électrique selon l'une des revendications précédentes, **caractérisée par** une enveloppe souple élastique (70, 71, 76), qui s'étend au moins sur une partie de la partie brosse (13), cette enveloppe étant de préférence disposée dans une région proche des poils, en particulier sur la face arrière d'une région à poils, un composant en plastique souple élastique du type caoutchouc entourant de préférence complètement ou partiellement une partie dure en plastique.

15. Partie brosse selon la revendication 14, **caractérisée en ce que** l'enveloppe (71) s'étend sur une partie, de préférence sur environ la moitié d'un pourtour de la partie brosse (13) et/ou seulement à proximité des poils (50).

16. Partie brosse selon la revendication 14 ou 15, **caractérisée en ce qu'**un composant souple élastique recouvre en outre complètement ou partiellement des régions latérales de la partie brosse (13).

17. Partie brosse selon l'une des revendications 14 à 16, **caractérisée en ce que** l'enveloppe (70, 71, 76) possède une surface structurée, en particulier avec des bosses ou des nervures.

18. Partie brosse selon l'une des revendications précédentes, **caractérisée en ce que** les poils (50) sont reliés de manière fixe directement à la partie brosse (13), ou bien de manière fixe par le biais d'un élément d'assemblage amovible.

19. Partie brosse selon l'une des revendications précédentes, **caractérisée en ce que** le corps de brosse (12) est conçu essentiellement en forme de tube et la pièce de montage (11) est conçue comme une douille.

20. Brosse à dents électrique avec un manche (1) et une partie brosse (13) selon l'une des revendications précédentes.

21. Brosse à dents électrique selon la revendication 20, **caractérisée en ce que** l'arbre (2) sort directement du manche (1).

22. Brosse à dents électrique selon la revendication 20 ou 21, **caractérisée par** une conception telle que la partie brosse (13) exécute un mouvement de vibration à haute fréquence, en particulier à au moins 100 Hz, de préférence entre 200 et 500 Hz, de préférence à environ 260 Hz.
